# EUROPÄISCHE PATENTSCHRIFT

(11) **EP 2 407 038 B1**
(45) Veröffentlichungstag und Bekanntmachung des Hinweises auf die Patenterteilung: **01.06.2016**
(21) Anmeldenummer: 11169992.2
(22) Anmeldetag: 15.06.2011
(51) Int. Cl.: A23B 4/07, A22C 11/00, A23L 3/36

(54) **Vorrichtung und Verfahren zur Kühlung von Nahrungsmittelmaschinen**
Method and device for cooling food machines
Dispositif et procédé de refroidissement de machines de produits alimentaires

(30) Priorität: 15.07.2010 DE 102010031393
(43) Veröffentlichungstag der Anmeldung: 18.01.2012
(73) Patentinhaber: Albert Handtmann Maschinenfabrik GmbH & Co. KG, 88400 Biberach (DE)
(72) Erfinder: Sailer, Günter, 88471 Laupheim (DE); Maile, Bernd, 88422 Oggelshausen (DE)
(74) Vertreter: Grünecker Patent- und Rechtsanwälte PartG mbB

(56) Entgegenhaltungen:
- US-A- 3 927 588
- US-A- 4 827 727
- US-A- 5 184 471

## Beschreibung

Die Erfindung betrifft eine Maschine zum Herstellen oder Verarbeiten von Nahrungsmitteln gemäß dem Oberbegriff des Anspruchs 1 sowie ein Verfahren zum Kühlen einer solchen Maschine gemäß Anspruch 8.

Eine Maschine zur Herstellung oder Verarbeitung von Nahrungsmitteln bzw. ein entsprechendes Verfahren mit einer Kühlung zum Kühlen des Maschinengehäuseinnenraumes ist bereits aus dem Stand der Technik bekannt.

Die US 3 927 588 A zeigt eine Schneideinrichtung für Lebensmittel, jedoch keine Maschine zur Wurstherstellung. Diese Druckschrift zeigt ein Gehäuse mit einem beweglichen Deckel. Hierbei handelt es sich um Produktionsraum der keimfrei sein soll, der aber keine Wärmeerzeuger aufweist, die gekühlt werden müssen. Die Vorrichtung umfasst eine Einrichtung zum Erzeugen heißer steriler Luft, die dem Schneidmesser zugeführt wird. Im Bereich des Deckels soll eine sterile Umgebung für das Lebensmittelprodukt erzeugt werden, wobei die erzeugte heiße sterile Luft vorher abgekühlt wird. Diese Luft dient nicht zum Kühlen eines Maschineninnengehäuses, sondern zum Erzeugen eines sterilen Raums bzw. eines Überdrucks. In dieser Druckschrift wird auch keine Lüftereinrichtung beschrieben. Diese Druckschrift beschreibt bereits eine UV-Quelle, die unterhalb einer Fördereinrichtung angeordnet ist, um die Unterseite der Fördereinrichtung zu sterilisieren. Die UV-Quelle kommt jedoch nicht mit einem Kühlluftstrom in Kontakt.

Bei der Herstellung oder Verarbeitung von Nahrungsmitteln werden hohe Hygieneanforderungen gestellt. Insbesondere muss auch die Raumluft, mit der ein offenes Lebensmittelprodukt in Kontakt kommen kann, möglichst keimfrei sein. Ein Erreger aus kontaminierter Raumluft kann in das Produkt gelangen. So ist es beispielsweise möglich, dass bei der Wurstherstellung Wurstbrät in einem Trichter oder Vorratsbehälter mit kontaminierter Raumluft in Kontakt kommt. Dies wiederum kann von einer Qualitätsbeeinträchtigung des Produkts bis hin zu gesundheitlichen Risiken für den Endverbraucher führen.

Bei der Produktion von Nahrungsmitteln tritt jedoch immer wieder trotz sorgfältiger Hygienemaßnahmen eine unerwünschte Keimbelastung auf.

Hiervon ausgehend liegt der vorliegenden Erfindung die Aufgabe zugrunde, eine Maschine zur Herstellung oder Verarbeitung von Nahrungsmitteln sowie ein entsprechendes Verfahren bereitzustellen, die zur Reduzierung der Keimbelastung der Raumluft und des Produkts beitragen.

Erfindungsgemäß wird diese Aufgabe durch die Merkmale der Ansprüche 1 und 8 gelöst.

Es hat sich herausgestellt, dass die Luftkühlung einer Maschine zur Herstellung von Nahrungsmitteln eine nicht zu vernachlässigende Kontaminationsquelle darstellen kann. Maschinen und Anlagen in der Nahrungsmittelproduktion, beispielsweise Kutter, Mischer, Emulsifier, Vakuumfüllmaschinen, Clipper, Verpackungsmaschinen etc. benötigen teilweise hohe elektrische Leistungen, wobei durch die Verlustleistung Wärme entsteht. Die Maschinen werden üblicherweise mit Raumluft gekühlt. Die Luft wird dabei mit einem Lüfter über einen Luftführungskanal in das Maschineninnere eingeblasen. Alternativ wird die Luft mit einem Lüfter aus dem Maschineninneren ausgeblasen. Da diese Maschinen üblicherweise in relativ kühler Umgebung eingesetzt werden, erhält man auf diese Weise eine effektive und effiziente Kühlung. Das Maschineninnere ist dabei üblicherweise nicht zugänglich zu Reinigungszwecken. Ebenso ist der Maschineninnenraum prinzipbedingt meist unhygienisch gestaltet. Folge davon ist unter anderem das Risiko einer Keimeintragung mit unkontrollierter Keimvermehrung im Maschineninnenraum, insbesondere als Folge der erwärmten Luft. Unerwarteterweise kann diese Abluft so kontaminiert sein, dass es zu den oben genannten Verkeimungsproblemen kommt.

Gemäß der vorliegenden Erfindung ist jedoch nun die Kühlung derart ausgebildet, dass die Raumluft nicht durch verkeimtes Kühlmittel kontaminiert wird. Unter Raumluft versteht man hier die Luft im Produktionsraum, in dem die Maschine aufgestellt ist. Somit kann die Keimzahl in der Raumluft und somit im Produkt wesentlich reduziert werden. Mit der vorliegenden Erfindung wird eine effektive und effiziente Maschinenkühlung ermöglicht ohne Verunreinigung der Raumluft bzw. des Maschineninnenraums durch Keime.

In besonders vorteilhafter Weise ist die Kühlung eine Luftkühlung mit einem Lufteinlass, einem Luftauslass, einer Lüftereinrichtung zum Erzeugen eines Kühlluftstroms im Inneren des Maschinengehäuses, sowie mindestens einer Einrichtung zum Entkeimen der Kühlluft. Dadurch, dass die Kühlluft entkeimt wird, kann sie dann bedenkenlos in den Produktionsraum abgeblasen werden, ohne dass die Gefahr einer Kontaminierung des Produkts besteht. Der Kühlmittelstrom strömt frei durch den Maschinengehäuseinnenraum. Das Innere des Maschinengehäuses ist von den Maschinengehäuseaußenwänden begrenzt. Im Inneren des Maschinengehäuses sind verschiedene elektronische Anlagekomponenten als Wärmeerzeuger angeordnet, die direkt von dem Kühlluftstrom umströmt und somit gekühlt werden. Zum gezielten Anströmen einzelner Komponenten kann der Kühlmittelstrom auch zusätzlich partiell geführt sein.

Es ist vorteilhaft, wenn die Einrichtung zum Entkeimen eine Strahlungsquelle, vorzugsweise eine UV-Strahlungsquelle umfasst. Insbesondere ist eine UVC-Strahlungsquelle geeignet. Es ist jedoch auch möglich, die Kühlluft mit Röntgenstrahlen, Gammastrahlen;. Elektronenbeschuss etc. zu entkeimen. Durch die Bestrahlung wird die DNS der Keime, beispielsweise der Viren, Bakterien oder Sporen, verändert, so dass sich diese Zellen nicht replizieren können. Die erreichbare Wirkung liegt bei > 99,99 %. Bei der Verwendung einer Strahlungsquelle, insbesondere UV-Strahlung, ergibt sich eine sehr hohe Prozesssicherheit und Produktionssicherheit durch stark reduzierte Keimbelastung. Dies führt zu einer sehr hohen Produktqualität und einer erhöhten Haltbarkeit. Auch eine hervorragende Lufthygiene und somit ein gesünderes Arbeitsumfeld für Mitarbeiter kann realisiert werden. Es müssen keine Chemikalien oder andere Stoffe in die Raumluft oder ins Produkt eingetragen werden. Durch die Bestrahlung der Kühlluft entstehen keine toxischen Verbindungen. Ebenso kommt es zu keiner Resistenzbildung der Mikroorganismen. Darüber hinaus werden die Mikroorganismen durch die Bestrahlung in Sekundenschnelle inaktiv. Dennoch bleiben die gewünschten Produkteigenschaften erhalten. Wird die Luft aus dem Produktionsraum in die Maschine einsaugt und auch wieder in den Produktionsraum ausgestoßen, so wird auch durch andere Quellen kontaminierte Raumluft automatisch mit entkeimt. Eine Strahlungsquelle als Einrichtung zum Entkeimen weist eine kompakte Bauform auf und kann einfach in die Maschine integriert werden. Eine UV-Quelle, insbesondere UVC-Quelle, ist kostengünstig und weist eine hohe Lebensdauer auf. Dabei ist der Energieverbrauch niedrig, so dass die Maschine bzw. die Lüftung auch über Nacht durchlaufen kann. Es ergeben sich somit minimale Lebenslaufkosten. Ein Lampentausch kann einfach und kostengünstig realisiert werden. Der gesamte Kühlluftstrom kann erfasst und entkeimt werden. Der Prozess ist leicht beherrschbar.

Die Einrichtung zum Entkeimen kann eine Luftentkeimungskammer aufweisen, in die,der Kühlluftstrom ein- und ausströmt. Durch Anordnung der Strahlungsquelle in einer entsprechenden Kammer kann sichergestellt werden, dass der gesamte Kühlluftstrom mit einer bestimmten Strahlungsintensität ausreichend entkeimt wird. Es ist jedoch genauso gut möglich, die Strahlungsquelle alternativ oder zusätzlich frei im Maschinengehäuseinnenraum anzuordnen. Befindet sich die Strahlungsquelle im Maschinengehäuseinnenraum, können damit auch Oberflächen einzelner Maschinenkomponenten bestrahlt und somit desinfiziert werden. Ferner ist es auch möglich, die Strahlungsquelle in einer Zuluftleitung und/oder Abluftleitung vorzusehen, die mit dem Lufteinlass bzw. Luftauslass des Maschinengehäuses verbunden sind. Das Anbringen der Strahlungsquelle in der Zuluft- oder Abluftleitung kann auch nachträglich sehr einfach vorgenommen werden. Die Strahlungsquelle kann auch als selbständiges Gerät in der Zuluft- oder Abluftleitung integriert sein, d.h. z.B. in Form einer Andockstation, die über eine Leitung insbesondere einen Schlauch z.B. an einem Einlass- oder Auslassstutzen des Maschinengehäuses befestigt ist. Dann kann beispielsweise auch die Lüftereinrichtung in dem separaten Gerät bzw. der Andockstation angeordnet sein.

Zur Maschinensteuerung ist im Maschinengehäuseinnenraum eine Elektronikbox vorgesehen, in der beispielsweise die Maschinensteuerung und andere empfindliche elektronische Bauteile angeordnet sind. Herkömmlicherweise wird diese Elektronikbox beheizt, um zu verhindern, dass sich nach dem Ausschalten der Maschine beim Abkühlen Feuchtigkeit durch Kondensation anlagert. In vorteilhafter Weise wird nun die Strahlungsquelle im Maschinengehäuseinnenraum derart angeordnet, dass die Elektronikbox durch die Strahlungsquelle erwärmt wird. Somit kann auf eine extra Heizung für die Elektronikbox verzichtet werden und die Abwärme der Strahlungsquelle sinnvoll genutzt werden.

Gemäß einer weiteren Ausführungsform umfasst die mindestens eine Einrichtung zum Entkeimen Mittel zum Einbringen eines desinfizierend wirkenden Wirkstoffnebels in dem Kühlluftstrom. Durch das Einbringen des Wirkstoffnebels werden die Keime abgetötet. Als Wirkstoff kommen hier z.B. Fruchtsäure, Benzoesäure, Sorbinsäure sowie Milchsäure oder Wasserstoffperoxid etc. insbesondere als Aerosol in Frage.

Auch dieses Ausführungsbeispiel bringt den Vorteil eines keimarmen Maschineninnenraums mit sich. Der Wirkstoffnebel kann sich durch den Kühlluftstrom im gesamten Maschinengehäuseinnenraum verteilen. Es kommt nur zu einer geringen bis zu gar keiner Qualitätsbeeinträchtigung des Nahrungsmittels durch den Wirkstoffnebelniederschlag. Es ergibt sich höchste Prozesssicherheit und höchste Produktionssicherheit und eine daraus resultierende hohe Produktqualität und erhöhte Haltbarkeit. Die Vermehrung von Mikroorganismen wird wirksam verhindert und vorhandene Mikroorganismen werden zuverlässig abgetötet. Kontaminierte Raumluft wird automatisch mit entkeimt. Eine entsprechende Einrichtung kann einfach im Maschinengehäuseinnenraum oder in einer Zu- und/oder Abluftleitung integriert werden. Alternativ kann auch ein kompaktes, mobiles Desinfektionsgerät verwendet werden. Dieses mobile Desinfektionsgerät kann beispielsweise in der Zu- oder Abluftleitung integriert sein, d.h. z.B. in Form einer Andockstation, das mit einer Leitung bzw. einem Schlauch an einen Einlass- oder Auslassstutzen des Gehäuses angeschlossen werden kann. Das mobile Desinfektionsgerät kann dann gegebenenfalls auch den Lüfter umfassen. Insgesamt ergeben sich geringe Kosten bei hoher Lebensdauer.

Gemäß einem weiteren Ausführungsbeispiel wird die Luft alternativ oder zusätzlich nicht in den Produktionsraum abgeblasen, sondern der Luftauslass ist mit einer Abluftleitung verbunden, über die der Kühlluftstrom außerhalb des Produktionsraums ausblasbar ist. Somit kommt kontaminierte Kühlluft nicht in Verbindung mit dem Lebensmittel. Es ist auch möglich, das Kühlmittel innerhalb eines geschlossenen Kreislaufs zu führen, d.h. dass die Abluft wieder als Zuluft für die Kühlung dient. Dabei ist dann noch ein Wärmetauschmittel vorgesehen, das die warme Abluft kühlt, bevor sie erneut als Kühlluft der Maschine zugeführt wird. Es ist auch möglich, die Kühlluft aus einem Bereich von außen zuzuführen. Diese Ausführungsform stellt ein geschlossenes, raumluftunabhängiges System dar. Es kommt zu keiner Beeinträchtigung der Raumluft und damit des Produkts. Auch hier ergibt sich höchste Prozesssicherheit und höchste Produktionssicherheit sowie eine hohe Produktqualität. Ferner gibt es geringe Kosten und eine erhöhte Haltbarkeit des Produkts. Auch hier kann auf den Eintrag von Chemikalien und anderen Stoffen in die Raumluft oder in das Produkt verzichtet werden. Diese Lösung ist sehr kostengünstig, weist eine hohe Lebensdauer auf und stellt einen leicht beherrschbaren Prozess dar. Keine Verbrauchsmaterialien sind erforderlich.

Schließlich kann alternativ oder zusätzlich die Luftkühlung durch eine Flüssigkeits-, insbesondere Wasserkühlung mit einem geschlossenen Kreislauf ersetzt werden, was ebenso die Luftkontamination verhindert. Alternativ oder zusätzlich kann die Kühlung auch durch eine Kältemaschine, insbesondere Kompressionskältemaschine, realisiert werden. Auch hier kommt es nicht zu kontaminierter Abluft. Das Maschineninnere wird dann durch Wärmetausch gekühlt.

Es ist auch möglich, in die Zu- und/oder Abluftleitung mindestens ein Filterelement zu integrieren. Die Filter (Grob-, Fein-, Elektrofilter etc.) können auch die Vermehrung von Mikroorganismen reduzieren und zu einem keimarmen Maschineninnenraum beitragen. Auch hier kommt es zu keiner Qualitätsbeeinträchtigung des Nahrungsmittels, jedoch zu einer erhöhten Prozesssicherheit und Produktionssicherheit und damit zu einer hohen Produktqualität. Die Haltbarkeit des Produkts kann erhöht werden. Die Produkteigenschaften bleiben erhalten. Die kontaminierte Raumluft wird gefiltert, was zu einer Entkeimung und Filtration führt. Insbesondere in Kombination mit einer vorgeschalteten Einrichtung zum Entkeimen können abgetötete Keime und andere unerwünschte Luftbestandteile aufgefangen werden.

Es ist ebenso vorteilhaft, wenn das Maschinengehäuse zusätzlich oder alternativ als offene oder zu öffnende Maschinenkonstruktion ausgebildet ist. Somit kann der Maschinengehäuseinnenraum regelmäßig gereinigt und desinfiziert werden, was zu einer deutlichen Reduktion der Keimbelastung des Kühlluftstroms führt.

Gemäß der Erfindung ist die Maschine eine Maschine zur Herstellung oder Verarbeitung von Lebensmitteln, insbesondere eine Maschine aus folgender Gruppe: Füllmaschine, Kutter, Emulsifier, Clipper, Verpackungsmaschine, etc.

Bei dem erfindungsgemäßen Verfahren wird also, wie zuvor erläutert, das Kühlmittel so behandelt oder geführt, dass Raumluft nicht dadurch verkeimt. Dies erfolgt insbesondere durch Bestrahlung oder einen desinfizierenden Wirkstoffnebel. Der Kühlmittelstrom wird mit UV-Strahlung, insbesondere einer UVC-Strahlung, bestrahlt. Beim Bestrahlen des Kühlluftstroms kann eine Elektronikbox durch die Strahlungswärme erwärmt werden.

Die ggfs. erforderliche Steuerung für die Einrichtung zum Entkeimen kann dabei wahlweise in die Maschinensteuerung integriert sein, oder als eigenständige Steuerung ausgeführt sein. Die Intensität der Strahlungsquelle ist einstellbar und wird insbesondere in Abhängigkeit der Keimdichte in der Luft und/oder der Bestrahlungsdauer eingestellt bzw. gesteuert oder geregelt. Die Veränderung der Bestrahlungsintensität kann beispielsweise durch Einschalten von einer oder mehreren Strahlungsquellen erfolgen oder durch die Änderung der Leistung. Entsprechend kann die in den Luftstrom eingebrachte Desinfektionsmittelmenge pro Zeit und die Einbringdauer des Desinfektionsmittels in Abhängigkeit der Keimdichte in der Luft eingestellt bzw. gesteuert oder geregelt werden.

Es ist auch eine Kombination von mindestens zwei der oben beschriebenen Ausführungsbeispielen möglich.

Die vorliegende Erfindung wird nachfolgend unter Bezugnahme der folgenden Figuren näher erläutert.
- Fig. 1a: zeigt einen grob schematischen Schnitt durch eine Maschine gemäß einer ersten Ausführungsform der vorliegenden Erfindung, bei der die Einrichtung zum Entkeimen in einer Luftentkeimungskammer im Maschinengehäuseinnenraum im Bereich des ausströmenden Kühlluftstroms angeordnet ist.
- Fig. 1b: zeigt einen Ausschnitt einer erfindungsgemäßen Ausführungsform in einer grobschematischen Schnittdarstellung, bei der die Einrichtung zum Entkeimen in der Abluftleitung vorgesehen ist.
- Fig. 2a: zeigt einen grob schematischen Schnitt durch eine Maschine gemäß einer weiteren Ausführungsform der vorliegenden Erfindung, bei der eine Einrichtung zum Entkeimen innerhalb des Maschinengehäuseinnenraums in einer Luftentkeimungskammer im Bereich des einströmenden Kühlluftstroms angeordnet ist.
- Fig. 2b: zeigt grob schematisch eine erfindungsgemäße Ausführungsform in einer grobschematischen Schnittdarstellung, bei der die Einrichtung zum Entkeimen in der Zuluftleitung vorgesehen ist.
- Fig. 3: zeigt grob schematisch einen Schnitt durch eine Ausführungsform gemäß der vorliegenden Erfindung, bei der die Einrichtung zum Entkeimen frei im Maschinengehäuseinnenraum angeordnet ist.
- Fig. 4: zeigt grob schematisch einen Schnitt durch eine Ausführungsform einer Maschine, bei der eine Strahlungsquelle im Bereich einer Elektronikbox angeordnet ist.
- Fig. 5: zeigt grob schematisch eine Ausführungsform gemäß der vorliegenden Erfindung, bei der die Kühlung eine Kältemaschine umfasst.
- Fig. 6: zeigt grob schematisch einen Schnitt durch eine Ausführungsform gemäß der vorliegenden Erfindung, bei der Luft von außen zugeführt wird und außerhalb des Produktionsraums abgeblasen wird.
- Fig. 7: zeigt eine Ausführungsform in grob schematischer Schnittdarstellung, bei der das Kühlmittel im Kreislauf geführt wird.

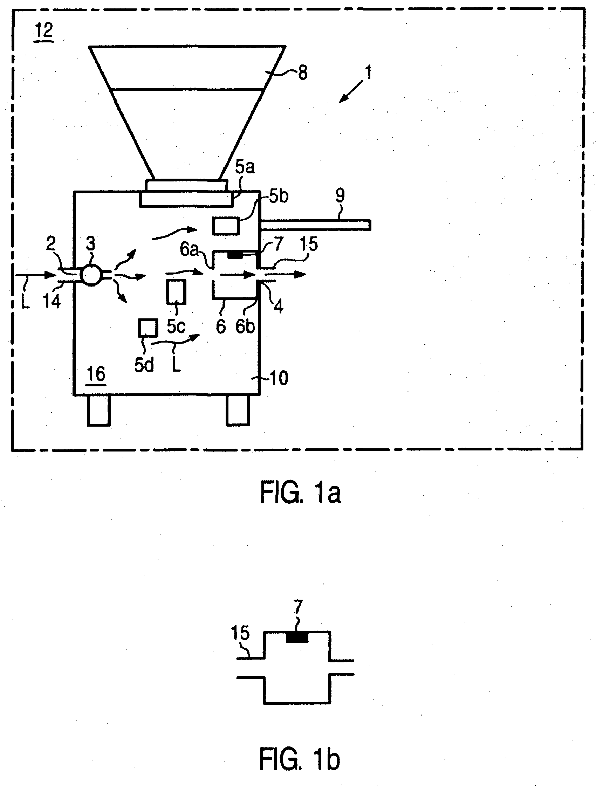

Fig. 1 zeigt grob schematisch einen Schnitt durch eine Maschine 1 zur Herstellung oder Verarbeitung von Nahrungsmitteln. Hier ist die Maschine zur Herstellung oder Verarbeitung von Nahrungsmitteln beispielsweise eine Füllmaschine zum Herstellen von Würsten. Die Maschine ist in einem Produktionsraum mit Raumluft 12 aufgestellt. Die Maschine umfasst dabei z.B. einen Trichter 8 zum Einfüllen von Füllgut z.B. Brät , ein Förderwerk 5a mit einem entsprechenden Antrieb, das das Wurstbrät in ein Füllrohr 9 schiebt sowie ein Füllrohr 9, über das das Wurstbrät in eine auf dem Füllrohr geraffte Wursthülle ausgestoßen wird. Solche Füllmaschinen sind allgemein bekannt. Der genaue Aufbau und die Funktion einer solchen Füllmaschine ist beispielsweise in der EP 0250733 gezeigt, so dass auf eine detaillierte Beschreibung einer solchen Maschine verzichtet wird.

Die Maschine umfasst hier ein geschlossenes Maschinengehäuse 10, in dem die unterschiedlichen Anlagekomponenten, insbesondere auch Wärmeerzeuger, angeordnet sind. Diese Anlage weist als Wärmeerzeuger z.B. das Förderwerk 5a mit einem entsprechenden Antrieb auf, zum Transport des Füllguts. Weiter weist die Einrichtung als Wärmeerzeuger beispielsweise einen Antrieb 5b zum Drehen des Füllrohrs 9 auf und einen Trafo 5c. Ferner kann z.B. auch ein Antrieb 5d für externe Vorsatzgeräte, wie z.B. einen Vorsatzwolf vorgesehen sein. Die Wärmeerzeuger 5a, b, c, d etc. befinden sich auf relativ kleinem Raum in dem geschlossenen Gehäuse 10. Maschinen und Anlagen in der Nahrungsmittelproduktion benötigen hohe elektrische Leistungen, wobei entsprechend viel Abwärme entsteht, so dass das Innere 16 des Gehäuses 10 gekühlt werden muss.

In diesem Ausführungsbeispiel ist die Kühlung eine Luftkühlung mit einem Lufteinlass 2, und einem Luftauslass 4 im Gehäuse, sowie einer Lüftereinrichtung 3 zum Erzeugen eines Kühlluftstroms im Inneren 16 des Maschinengehäuses 10. Hier ist die Lüftereinrichtung 3 im Bereich des Lufteinlasses 2 innerhalb des Gehäuses 10 angeordnet. Die Lüftereinrichtung 3, die den Kühlluftstrom 11 erzeugt, kann jedoch ebenso in einer Zuluftleitung 14 vorgesehen sein. Als Lüftereinrichtung 3 kommen beispielsweise Radial- oder Axiallüfter zum Einsatz. Zusätzlich oder alternativ kann die Luft auch über eine Lüftereinrichtung im Abluftbereich, d.h. in einer Abluftleitung 15 oder vor einem Luftauslass 4, aus dem Maschinengehäuseinnenraum 16 angesaugt und abgeblasen werden (nicht dargestellt). Bei diesem Ausführungsbeispiel wird Raumluft aus dem Produktionsraum 12 als Kühlluftstrom L angesaugt und wieder, wie durch die Pfeile dargestellt ist, über den Luftauslass des Gehäuses abgegeben. Der Lufteinlass 2 und der Luftauslass 4 können mit entsprechenden Zu- und Abluftleitungen 14 und 15 oder entsprechenden Anschlussstutzen verbunden sein, jedoch auch nur als Öffnung im Gehäuse ausgebildet sein. Da die Maschinen üblicherweise in relativ kühler Umgebung eingesetzt werden, erhält man auf diese Weise eine effektive und effiziente Luftkühlung.

Um zu verhindern, dass Luft 12 im Produktionsraum mit keimbelasteter Kühlluft kontaminiert wird, ist eine Einrichtung 7 zum Entkeimen der Kühlluft vorgesehen. In dieser speziellen Ausführungsform ist dazu eine Luftentkeimungskammer 6 im Bereich des Luftauslasses 4 vorgesehen. Die geschlossene Kammer weist eine Einströmöffnung 6a und eine Ausströmöffnung 6b für den Kühlluftstrom L auf. Hier ist die Kammer an der Gehäusewandung angeordnet, so dass die Öffnung 6b im Wesentlichen dem Luftauslass 4 entspricht. Innerhalb der Kammer ist gemäß einer ersten Ausführungsform eine Strahlungsquelle 7 zum Entkeimen vorgesehen. Diese Strahlungsquelle kann eine oder mehrere UV-, insbesondere UVC-Strahlungsquellen sein. Es ist jedoch auch möglich, eine Röntgen- oder Gammastrahlungsquelle zu verwenden oder den Luftstrom durch Elektronenbeschuss etc. zu entkeimen. Besonders vorteilhaft ist jedoch eine UVC-Strahlungsquelle. Eine UVC-Strahlungsquelle weist dabei vorzugsweise eine Leistung von 15 bis 250 Watt auf bei einem Kühlmittelstrom in einem Bereich von 1 bis 600 m³/h, sowie einem Innenvolumen des Gehäuses in einem Bereich von 100 l bis 10.000 l. Die Strahlung, insbesondere die UVC-Strahlung, bewirkt die Entstehung von Thymindimeren, was zu einer Strukturänderung der DNA-Helix der Keime führt und Replikation und Transkription beeinträchtigt. Die Viren, Bakterien und Sporen werden dabei alle durch eine Veränderung der DNS deaktiviert. Es entstehen hierbei derart viele DNS-Fehler, dass sich die Zelle nicht mehr teilen kann. Die erreichbare Wirkung (Abtöten der Keime) liegt bei > 99,99 %. Dadurch, dass der Kühlluftstrom L durch die Kammer 6 strömt, ist sichergestellt, dass der gesamte Kühlluftstrom einmal mit ausreichender Intensität bestrahlt wurde. Die weitestgehend keimfrei austretende Kühlluft kontaminiert somit nicht die Raumluft 12. Es können demnach nahezu keine Erreger durch die Luftströmung aus der kontaminierten Raumluft 12 in das Produkt, z.B. Wurstbrät, gelangen. Die Qualität des Produkts wird nicht beeinträchtigt und es kommt auch nicht zu gesundheitlichen Risiken für den Endverbraucher oder den Mitarbeiter im Raum 12.

Wie in Fig. 1b dargestellt ist, kann die Einrichtung zum Entkeimen 7 nicht nur innerhalb des Gehäuses 10 angeordnet sein, sondern sich auch in einer Abluftleitung 15 befinden, wie in Fig. 1b dargestellt ist. Die Einrichtung zum Entkeimen kann auch in Form einer Andockstation in die Abluftleitung 15, also als selbständiges Gerät, integriert werden, wobei die Andockstation beispielsweise mit einer Leitung bzw. Schlauch an einen Auslassstutzen angeschlossen werden kann. Diese Andockstation kann auch den Lüfter 3 umfassen.

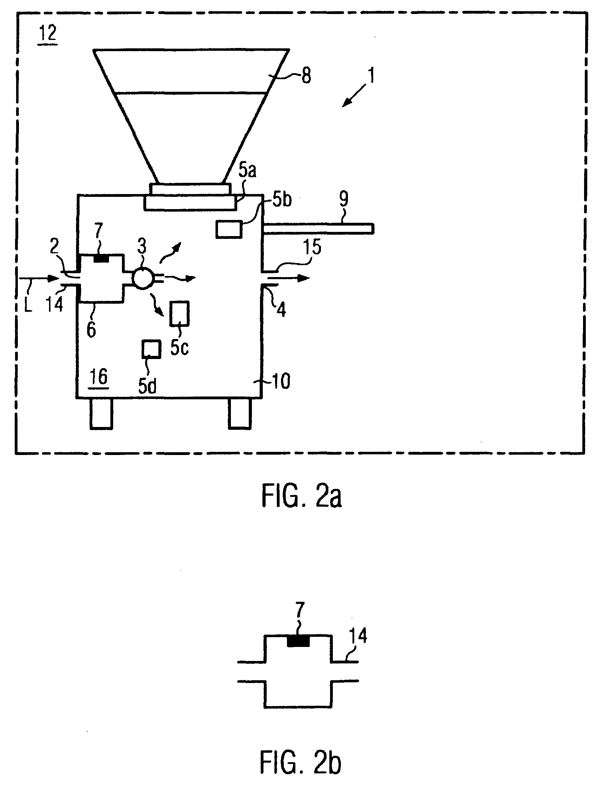

Fig. 2a zeigt ein weiteres Ausführungsbeispiel gemäß der vorliegenden Erfindung, das dem in Fig. 1 gezeigten Ausführungsbeispiel entspricht, wobei jedoch die Einrichtung zum Entkeimen 7 im Bereich des Lufteinlasses 2 ebenfalls in einer Luftehtkeimungskammer 6 angeordnet ist, durch die der Kühlluftstrom L strömt und dabei durch die Strahlung entkeimt wird. Wie aus Fig. 2b hervorgeht, kann hier die Einrichtung zum Entkeimen 7 auch in der Zuluftleitung 14, die zum Lufteinlass 2 führt, angeordnet sein. Die Einrichtung zum Entkeimen 7 kann auch hier als selbständiges Gerät in Form einer Andockstation, beispielsweise mit einem Schlauch oder einer Leitung an den Einlass- oder Auslassstutzen des Gehäuses angeschlossen werden und so einen Teil der Zuluftleitung bilden. Diese Andockstation kann dann auch gegebenenfalls den Lüfter 3 umfassen. Während bei dem in Fig. 1a, b gezeigten Ausführungsbeispiel sichergestellt wird, dass ausschließlich komplett entkeimte Kühlluft direkt in den Raum 12 tritt, bringt die Ausführungsform, wie in Fig. 2, 2b gezeigt ist, den Vorteil mit sich, dass bereits entkeimte Luft in den Maschinengehäuseinnenraum 16 strömt, so dass ein Verkeimen der Oberflächen reduziert werden kann. Besonders vorteilhaft ist es, wenn sowohl im Bereich des Lufteinlasses als auch im Bereich des Luftauslasses entsprechende Einrichtungen zum Entkeimen der Kühlluft vorgesehen sind.

Gemäß einem weiteren Ausführungsbeispiel ist es jedoch auch möglich, die Einrichtung zum Entkeimen 7 innerhalb des Gehäuses 10 im Maschinengehäuseinnenraum 16 frei anzuordnen. Diese Ausführungsform bringt den Vorteil mit sich, dass auch Oberflächen der einzelnen Maschinenkomponenten im Inneren des Gehäuses, beispielsweise über die Strahlungsquelle desinfiziert werden können.

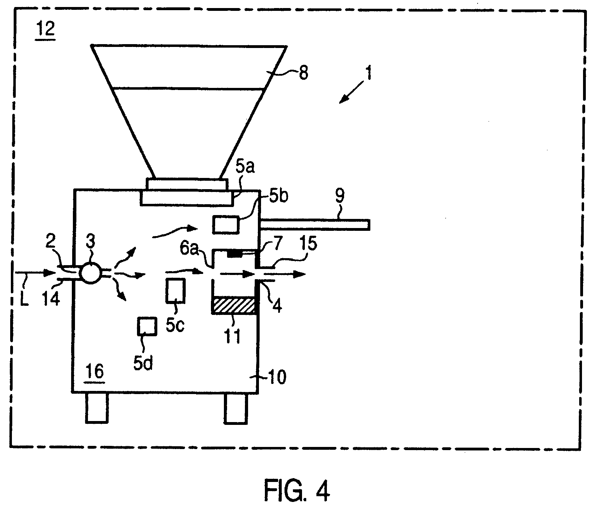

Fig. 4 zeigt eine weitere Ausführungsform gemäß der vorliegenden Erfindung. Hier ist die Strahlungsquelle 7, insbesondere die UVC-Strahlungsquelle, so nah an einer Elektronikbox 11 angeordnet, dass die Elektronikbox 11 durch die Strahlung und/oder durch die Abwärme der Strahlungsquelle erwärmt wird z.B. um 10 - 20°K. Die Elektronikbox umfasst z.B. die Maschinensteuerung. Das Erwärmen der Elektronikbox ist vorteilhaft, da somit verhindert werden kann, dass sich Kondenswasser an den elektronischen Teilen anlagert. Somit kann auf eine Heizung der Elektronikbox 11 verzichtet werden.

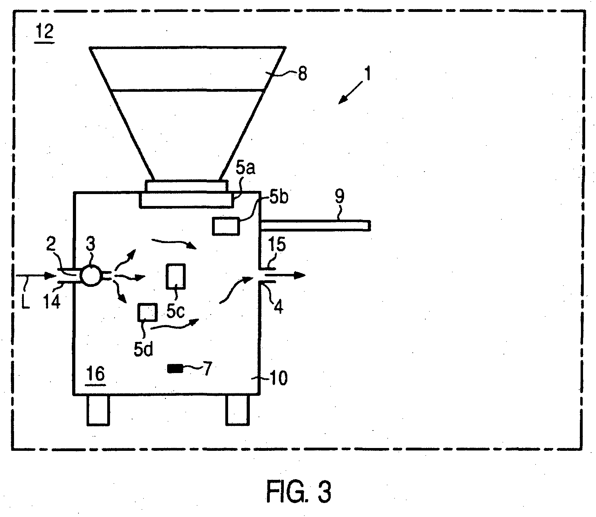

Die Fig. 1 bis 3 wurden im Zusammenhang mit einer Einrichtung zum Entkeimen 7 beschrieben, die eine Strahlungsquelle umfasst. Anstelle der Strahlungsquelle kann jedoch auch eine Einrichtung vorgesehen werden, die einen desinfizierend wirkenden Wirkstoffnebel in den Kühlluftstrom einbringt. Dazu ist vorzugsweise eine Düse vorgesehen, die über eine nicht dargestellte Leitung mit einem Vorratsbehälter für den Wirkstoff über eine Pumpe verbunden ist. Anstelle der Pumpe kann auch ein Verdampfer vorgesehen sein. Die Düse ist derart ausgebildet, dass ein feiner Nebel erzeugbar ist. Durch Einbringen des Aerosolnebels in den Kühlluftstrom werden Keime abgetötet. Hierfür kommen folgende Wirkstoffe in Frage: Fruchtsäure, Benzoesäure, Sorbinsäure, Milchsäure, Wasserstoffperoxid etc. Vorzugsweise wird dabei ein feiner Aerosolnebel erzeugt. Die Düse kann dabei, wie im Zusammenhang mit den vorherigen Ausführungsbeispielen im Zusammenhang mit den Fig. 1a, b, 2a, b sowie 3 beschrieben wurde, an den entsprechenden Stellen angeordnet sein, wo auch die Strahlungsquelle 7 angeordnet ist, d.h. im Bereich des Lufteinlasses und/oder Luftauslasses in entsprechenden Luftentkeimungskammern 6 und/oder in der Zu- und Abluftleitung 14, 15 und/oder oder aber frei im Maschinengehäuseinnenraum 16. Das Einbringen des Aerosolnebels kann kontinuierlich in geringen Mengen, z.B. 10 bis 450 ml/h erfolgen. Es ist jedoch auch möglich, den Aerosolnebel nicht kontinuierlich, sondern in bestimmten Intervallen einzubringen. Dies ist ausreichend, da sich der desinfizierende Wirkstoff auf den Oberflächen niederschlägt und dadurch eine erhöhte Keimbildung verhindert, bzw. vorhandene Keime abtötet.

Dieses Ausführungsbeispiel bringt also auch den Vorteil eines keimarmen Maschineninnenraums mit sich, wenn der Aerosolnebel über den Kühlluftstrom L im gesamten Maschineninnenraum gleichmäßig verteilt wird und zur Desinfektion der Oberflächen führt. Die Qualität der Nahrungsmittel wird dabei nur gering oder gar nicht beeinträchtigt. Auch diese Lösung ist einfach in die Maschine integrierbar. Eine entsprechende Lösung ist besonders kostengünstig zu realisieren. Die Entkeimung kann während der Produktion mit der Maschine, jedoch auch während der Pause oder anderen Stillstandszeiten, wie z. B. über Nacht erfolgen. Vorzugsweise weist die Einrichtung zum Entkeimen eine Steuerung auf, die die einzelnen Aktoren der Einrichtung zum Entkeimen ansteuert. Die Steuerung kann dabei wahlweise in die Maschinensteuerung integriert sein oder als eigenständige Steuerung ausgeführt sein. Vorteilhaft ist die Integration der Steuerung in die Maschinensteuerung, da dann der Benutzer von einer Bedieneroberfläche die gesamte Maschine einschließlich Kühlung und Kühlluftdesinfektion bedienen kann.

Es ist dann vorteilhaft, wenn die Intensität der Strahlungsquelle zum Beispiel in Abhängigkeit der Keimdichte in der Luft gesteuert oder geregelt wird. Die Keimdichte kann beispielsweise über eine entsprechende Vorrichtung in Situ in der Vorrichtung oder in der Raumluft erfasst werden und beispielsweise durch Anlegen einer Kultur in bekannter Weise bestimmt werden. Die Intensität der Strahlungsquelle kann ebenfalls in Abhängigkeit der Bestrahlungsdauer gesteuert oder geregelt bzw. eingestellt werden. Die Intensität ist beispielsweise einstellbar, indem eine oder mehrere Strahlungsquellen angeschaltet werden. Auch durch Variieren der Leistung der Strahlungsquelle kann die Intensität eingestellt werden.

Auch die Desinfektionsmittelmenge, die pro Zeit in den Kühlstrom eingebracht wird und die Dauer des Einsprühens ist einstellbar und kann insbesondere in Abhängigkeit der Keimdichte in der Luft gesteuert oder geregelt werden.

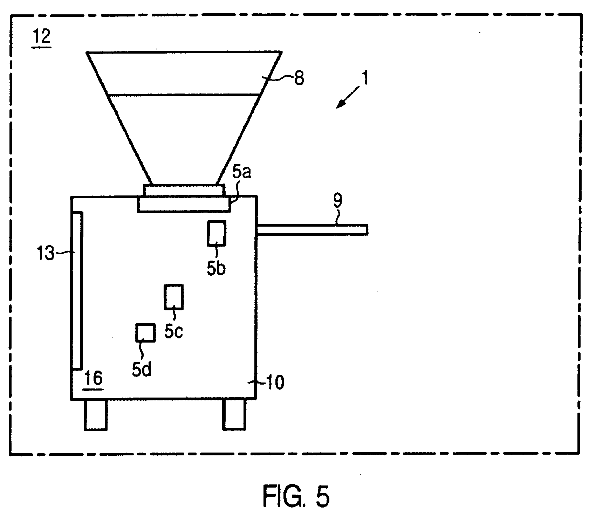

Fig. 5 zeigt eine weitere Ausführungsform gemäß der vorliegenden Erfindung. Zur Vermeidung der Verkeimung der Raumluft 12 ist hier anstatt einer Luftkühlung 2, 4, 3 eine Kältemaschine 13, insbesondere eine Kompressionskältemaschine 13 vorgesehen. Über eine Fläche der Kältemaschine wird die Luft im Maschinengehäuseinnenraum 16 durch Wärmetausch gekühlt. Der Antrieb für die Kältemaschine erfolgt beispielsweise elektrisch oder z.B. mit Gas etc.

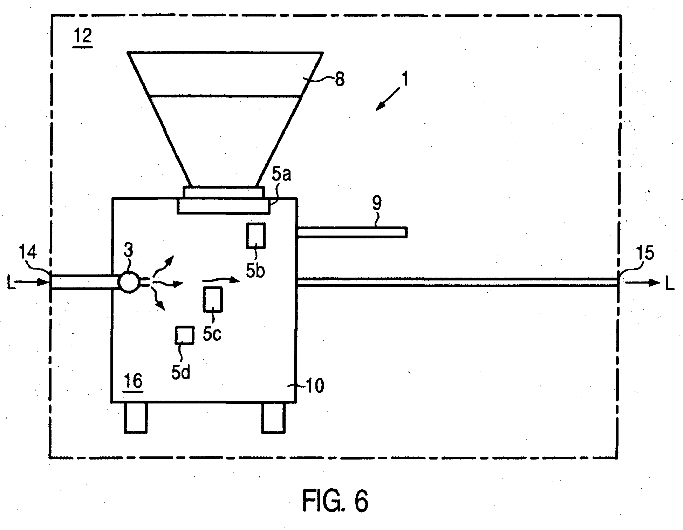

Fig. 6 zeigt eine weitere Ausführungsform gemäß der vorliegenden Erfindung. Um eine Kontaminierung der Raumluft durch verkeimtes Kühlmittel zu verhindern, ist die Abluftleitung 15 der Luftkühlung so lang ausgeführt, dass der Kühlluftstrom L außerhalb des Produktionsraumes ausgeblasen werden kann. Hierzu können Rohre, Schläuche oder ähnliches an die Maschine 1 angeschlossen werden. Optional kann die zur Kühlung vorgesehene Luft auch über die Zuluftleitung 14 von außerhalb angesaugt bzw. eingeblasen werden.

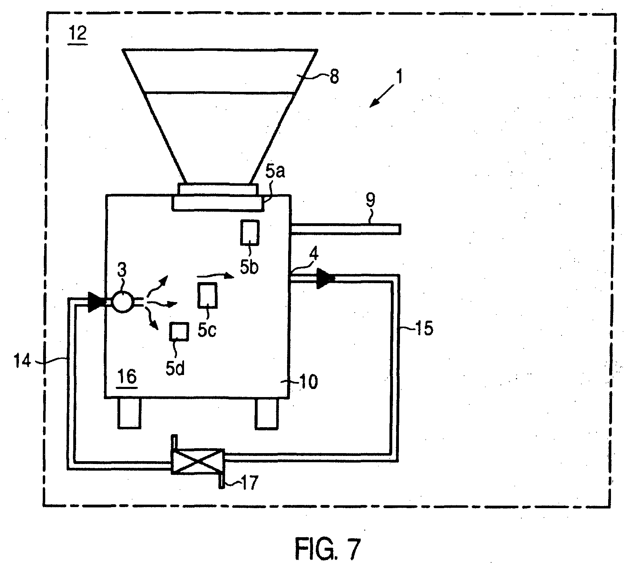

Fig. 7 zeigt eine weitere Ausführungsform gemäß der vorliegenden Erfindung. Hier kann der Kühlluftstrom L über eine entsprechende Ringleitung 15, 14 in einem geschlossenen Kreislauf geführt werden. Das heißt, dass der Kühlluftstrom L aus dem Luftauslass 4 erneut zur Kühlung über den Lufteinlass 2 in die Maschine bzw. in das Gehäuse 10 eingeleitet wird. Dazu ist vorzugsweise eine Wärmetauscheinrichtung 17 vorgesehen, die den erwärmten Kühlluftstrom abkühlt. Die aus dem Wärmetauscher gewonnene Abwärme kann für andere Zwecke wiederverwendet werden. Dies bringt den Vorteil mit sich, dass einerseits das Innere des Gehäuses 10 ausreichend gekühlt werden kann und die Abwärme in effizienter Weise weiter genutzt werden kann, ohne aber die Raumluft 12 zu kontaminieren. Ein entsprechend geschlossener Kreislauf kann auch über eine im Kreislauf geführte Flüssigkeitskühlung realisiert werden. Es ist jedoch auch eine Flüssigkeitskühlung mit offenem Kreislauf möglich.

Wenn auch nicht dargestellt, kann zusätzlich oder alternativ zur Reinigung des Kühlluftstroms im Bereich des Lufteinlasses 2 und/oder des Luftauslasses 4 oder in der Zuluftleitung 14 und/oder Abluftleitung 15 mindestens ein Filterelement angeordnet sein. Als Filterelement kommt beispielsweise ein Grob-, Fein-, Elektro-, oder Nassluftfilter in Frage. Entsprechende Filter dienen auch zur Keimreduktion. Die Filter können abgetötete Keime und andere unerwünschte Luftbestandteile auffangen. Es können auch Filter mit desinfizierender Wirkung, z. B. Filter mit Silber- oder Titandioxidbeschichtung eingesetzt werden
Es ist auch vorteilhaft, wenn das Gehäuse als offene oder zu öffnende Maschinenkonstruktion ausgebildet ist. Dadurch ist es möglich, dass der Maschineninnenraum gereinigt werden kann. Somit können vorhandene Mikroorganismen abgetötet werden und ein erneutes Verkeimen der Kühlluft kann reduziert werden. Bei der offenen Maschinenkonstruktion weist das Gehäuse an zumindest einer Seite eine ausreichend große Öffnung auf. Das Gehäuse kann auch so ausgebildet sein, dass z.B. mindestens eine Wand des Gehäuses 10 zumindest teilweise geöffnet werden kann oder aber komplett von einem Gestell abnehmbar ist.

Die einzelnen gezeigten Ausführungsformen können auch untereinander kombiniert werden.

## Patentansprüche

1. Maschine (1) zur Herstellung oder Verarbeiten von Nahrungsmitteln, wobei die Maschine eine Maschine zur Wurstherstellung ist, insbesondere eine Maschine aus folgender Gruppe ist: Füllmaschine, Cutter, Emulsifier, Klipper, Verpackungsmaschine mit einem Maschinengehäuse (10), in dem Wärmeerzeuger angeordnet sind, einer Kühlung (2, 3, 4) zum Kühlen des Maschinengehäuseinnenraums (16), **dadurch gekennzeichnet, dass**
die Kühlung (2, 3, 4) derart ausgebildet ist, dass die Raumluft (12) nicht durch verkeimtes Kühlmittel (11) kontaminiert wird,
wobei die Kühlung (2, 3, 4) eine Luftkühlung ist mit
einem Lufteinlass (2),
einem Luftauslass (4),
einer Lüftereinrichtung (3) zum Erzeugen eines Kühlluftstroms im Inneren (16) des Maschinengehäuses (10) sowie
mindestens einer Einrichtung (7) zum Entkeimen der Kühlluft, wobei die Einrichtung zum Entkeimen (7) eine Strahlungsquelle oder Mittel zum Einbringen eines desinfizierend wirkenden Wirkstoffnebels in den Kühlluftstrom umfasst.

2. Maschine nach Anspruch 1, wobei die Einrichtung (7) zum Entkeimen eine UV-Strahlungsquelle, insbesondere eine UVC-Strahlungsquelle umfasst.

3. Maschine nach mindestens einem der Ansprüche 1 bis 2, **dadurch gekennzeichnet, dass** die Einrichtung zum Entkeimen (7) eine Luftentkeimungskammer (6) umfasst, in der die Strahlungsquelle angeordnet ist, und die durch den Kühlluftstrom (L) durchströmt wird, und/oder die Strahlungsquelle frei im Maschinengehäuseinnenraum (16) angeordnet ist und/oder die Strahlungsquelle in einer Zuluftleitung (14) und/oder Abluftleitung (15) vorgesehen ist.

4. Maschine nach mindestens einem der Ansprüche 1 bis 3, **dadurch gekennzeichnet, dass** im Maschinengehäuseinnenraum (16) eine Elektronikbox (11) angeordnet ist, wobei die Strahlungsquelle (7a) derart angeordnet ist, dass die Elektronikbox durch die Strahlungsquelle oder deren Abwärme erwärmt wird.

5. Maschine nach mindestens einem der Ansprüche 1 bis 4, **dadurch gekennzeichnet, dass** der Luftauslass (4) mit einer Abluftleitung (15) verbunden ist, über die der Kühlluftstrom außerhalb des Produktionsraums ausblasbar ist und/oder dass das Kühlmittel innerhalb eines geschlossenen Kreislaufs geführt wird und/oder dass die Kühlung eine Kältemaschine, insbesondere Kompressionskältemaschine umfasst.

6. Maschine nach mindestens einem der Ansprüche 1 bis 5, **dadurch gekennzeichnet, dass** in einer Zu- und/oder Abluftleitung (14, 15) mindestens ein Filterelement angeordnet ist.

7. Maschine nach mindestens einem der Ansprüche 1 bis 6, **dadurch gekennzeichnet, dass** das Maschinengehäuse (9) als offene oder zu öffnende Maschinenkonstruktion ausgebildet ist.

8. Verfahren zum Kühlen einer Maschine zur Herstellung oder Verarbeitung von Nahrungsmitteln nach mindestens einem der Ansprüche 1 bis 7, wobei das Kühlmittel so behandelt oder geführt wird, dass Raumluft nicht dadurch verkeimt,
wobei die Kühlung eine Lüftkühlung ist mit einem Lufteinlass (2), einem Luftauslass (4) und einer Lüftereinrichtung (3) zum Erzeugen eines Kühlluftstroms im Inneren (16) des Maschinengehäuses (10) und die Kühlluft über mindestens eine Einrichtung zum Entkeimen entkeimt wird,
durch Bestrahlung oder durch einen desinfizierenden Wirkstoffnebel.

9. Verfahren nach Anspruch 8, **dadurch gekennzeichnet, dass** der Kühlmittelstrom mit UV-Strahlung, insbesondere einer UVC-Strahlung bestrahlt wird.

10. Verfahren nach mindestens einem der Ansprüche 8 bis 9, **dadurch gekennzeichnet, dass** beim Bestrahlen des Kühlluftstroms eine Elektronikbox durch die Strahlungswärme oder Abwärme der Strahlungsquelle erwärmt wird.

11. Verfahren nach mindestens einem der Ansprüche 8 bis 10, **dadurch gekennzeichnet, dass** die Intensität der Strahlungsquelle einstellbar ist und insbesondere in Abhängigkeit der Keimdichte in der Luft und/oder der Bestrahlungsdauer gesteuert oder geregelt wird oder
die Desinfektionsmittelmenge pro Zeit und die Dauer die der desinfizierende Wirkstoff eingebracht wird einstellbar ist und insbesondere in Abhängigkeit der Keimdichte in der Luft gesteuert oder geregelt wird.

12. Maschine nach mindestens einem der Ansprüche 1 bis 7, **dadurch gekennzeichnet, dass** die Steuerung der Einrichtung zum Entkeimen (7) in der Maschinensteuerung der Maschine integriert ist.

## Claims

1. Machine (1) for the production or processing of food wherein the machine is a machine for sausage production, particularly a machine from the following group:
filling machine, cutter, emulsifier, clipper, packaging machine,
with a machine housing (10) in which heat generators are arranged and a cooling system (2, 3, 4) for cooling the machine housing interior (16), **characterised in that**
the cooling system (2, 3, 4) is formed in such a way that the ambient air (12) is not contaminated by the cooling agent (11) that is contaminated with germs, wherein
the cooling system (2, 3, 4) is an air cooling system with
an air inlet (2),
an air outlet (4),
a ventilating device (3) for generating a cooling air flow in the interior (16) of the machine housing (10) as well as
at least one device (7) for removing germs from the cooling air, wherein the device for removing germs (7) comprises a radiation source or means for introducing a disinfecting active substance mist into the cooling air flow.

2. Machine according to Claim 1, **characterised in that** the device for removing germs (7) comprises a UV radiation source, particularly a UVC radiation source.

3. Machine according to at least one of the Claims 1 to 2, **characterised in that** the device for removing germs (7) comprises a chamber for removing germs from the air (6) in which the radiation source is arranged and through which the cooling air flow (L) flows, and / or the radiation source is freely arranged in the machine housing interior (16) and / or the radiation source is provided in a supply air line (14) and / or exhaust air line (15).

4. Machine according to at least one of the Claims 1 to 3, **characterised in that** an electronics box (11) is arranged in the machine housing interior (16), wherein the radiation source (7a) is arranged in such a way that the electronics box is heated by the radiation source or its waste heat.

5. Machine according to at least one of the Claims 1 to 4, **characterised in that** the air outlet (4) is connected to an exhaust air line (15) by means of which the cooling air flow can be blown off outside of the production area and / or that the cooling agent is conducted within a closed circuit and / or that the cooling system comprises a cooling machine, particularly a compression cooling machine.

6. Machine according to at least one of the Claims 1 to 5, **characterised in that** at least one filter element is arranged in a supply and / or exhaust air line (14, 15).

7. Machine according to at least one of the Claims 1 to 6, **characterised in that** the machine housing (9) is formed as an open machine design or as a machine design that can be opened.

8. Method for cooling a machine for producing or processing food according to at least one of the Claims 1 to 7, wherein the cooling agent is treated or conducted in such a way that the ambient air is not contaminated with germs as a result,
wherein the cooling system is an air cooling system with an air inlet (2), an air outlet (4) and a ventilating device (3) for generating a cooling air flow in the interior (16) of the machine housing (10) and the cooling air is removed from germs by at least one device for removing germs,
by means of irradiation or by disinfecting active substance mist.

9. Method according to Claim 8, **characterised in that** the cooling agent flow is irradiated with UV radiation, particularly with UVC radiation.

10. Method according to at least one of Claims 8 to 9, **characterised in that** during the irradiation of the cooling air flow, an electronics box is heated by the radiant heat or waste heat of the radiation source.

11. Method according to at least one of the Claims 8 to 10, **characterised in that** the intensity of the radiation source can be adjusted and is controlled or regulated particularly depending on the germ density in the air and / or the irradiation duration or
the quantity of disinfectant per time and the duration of the introduction of the disinfecting active substance can be adjusted and particularly is controlled or regulated depending on the germ density in the air.

12. Machine according to at least one of the Claims 1 to 7, **characterised in that** the controller of the device for removing germs (7) is integrated in the machine controller of the machine.

## Revendications

1. Machine (1) destinée à la fabrication ou au traitement de transformation de produits alimentaires, la machine étant une machine destinée à la fabrication de saucisses, notamment une machine parmi celles du groupe suivant : machine de remplissage, appareillage de coupe, émulsionneur, appareil à clipper, machine d'emballage, comprenant un carter de machine (10) dans lequel sont agencés des éléments de production de chaleur, et un système de refroidissement (2, 3, 4) pour refroidir l'espace intérieur (16) du carter de machine, **caractérisée en ce que**
le système de refroidissement (2, 3, 4) est configuré pour ne pas contaminer l'air ambiant de local (12) par un agent de refroidissement (11) contenant des germes, le système de refroidissement (2, 3, 4) étant un refroidissement par air comprenant
une entrée d'air (2),
une sortie d'air (4),
un dispositif à ventilateur (3) pour produire un flux d'air de refroidissement dans l'espace intérieur (16) du carter de machine (10),
ainsi qu'au moins un dispositif (7) pour désinfecter, stériliser ou débarrasser de ses germes, l'air de refroidissement, le dispositif pour désinfecter ou stériliser (7) comprenant une source de rayonnement ou des moyens pour introduire un brouillard d'agent actif à action désinfectante dans le flux d'air de refroidissement.

2. Machine selon la revendication 1, dans laquelle le dispositif (7) pour désinfecter ou stériliser comprend une source de rayonnement UV, notamment une source de rayonnement UVC.

3. Machine selon l'une au moins des revendications 1 à 2, **caractérisée en ce que** le dispositif pour désinfecter ou stériliser (7) comprend une chambre de désinfection ou de stérilisation d'air (6) dans laquelle est agencée la source de rayonnement, et dans laquelle s'écoule le flux d'air de refroidissement (L), et/ou la source de rayonnement est agencée librement dans l'espace intérieur (16) du carter de machine, et/ou la source de rayonnement est prévue dans une conduite d'amenée d'air (14) et/ou une conduite d'échappement d'air (15).

4. Machine selon l'une au moins des revendications 1 à 3, **caractérisée en ce que** dans l'espace intérieur (16) du carter de machine est agencé un boitier d'électronique (11), la source de rayonnement (7a) étant agencée de manière telle, que le boitier d'électronique soit échauffé par la source de rayonnement ou la chaleur qu'elle dissipe.

5. Machine selon l'une au moins des revendications 1 à 4, **caractérisée en ce que** la sortie d'air (4) est reliée à une conduite d'échappement d'air (15), par l'intermédiaire de laquelle le flux d'air de refroidissement peut être soufflé hors du local de production, et/ou **en ce que** l'agent de refroidissement est mené à l'intérieur d'un circuit fermé, et/ou **en ce que** le système de refroidissement comprend une machine frigorifique, notamment une machine frigorifique à compression.

6. Machine selon l'une au moins des revendications 1 à 5, **caractérisée en ce que** dans une conduite d'amenée et/ou d'échappement d'air (14, 15) est agencé au moins un élément de filtre.

7. Machine selon l'une au moins des revendications 1 à 6, **caractérisée en ce que** le carter de machine (9) est réalisé sous forme de construction de machine ouverte ou à ouvrir.

8. Procédé pour refroidir une machine destinée à la fabrication ou au traitement de transformation de produits alimentaires selon l'une au moins des revendications 1 à 7, procédé d'après lequel l'agent de refroidissement est traité et géré et guidé de manière à ce que l'air ambiant de local ne soit pas souillé par des germes,
et d'après lequel le système de refroidissement est un refroidissement par air comprenant une entrée d'air (2), une sortie d'air (4), et un dispositif à ventilateur (3) pour produire un flux d'air de refroidissement dans l'espace intérieur (16) du carter de machine (10), l'air de refroidissement étant désinfecté, stérilisé ou débarrassé de ses germes au moyen d'au moins un dispositif pour désinfecter ou stériliser, par irradiation ou par un brouillard d'agent actif désinfectant.

9. Procédé selon la revendication 8, **caractérisé en ce que** le flux d'agent de refroidissement est irradié par un rayonnement UVC, notamment un rayonnement UVC.

10. Procédé selon l'une au moins des revendications 8 à 9, **caractérisé en ce que** lors de l'irradiation du flux d'air de refroidissement, un boitier d'électronique est échauffé par la chaleur de rayonnement ou la chaleur dissipée de la source de rayonnement.

11. Procédé selon l'une au moins des revendications 8 à 10, **caractérisé en ce que** l'intensité de la source de rayonnement est réglable, et est notamment commandée ou régulée en fonction de la densité de germes dans l'air et/ou de la durée d'irradiation, ou bien la quantité d'agent désinfectant par unité de temps et la durée pendant laquelle l'agent actif désinfectant est introduit peuvent être réglées, et sont notamment commandées ou régulées en fonction de la densité de germes dans l'air.

12. Machine selon l'une au moins des revendications 1 à 7, **caractérisée en ce que** la commande du dispositif pour désinfecter ou stériliser (7) est intégrée à la commande de machine de la machine.
